# EUROPEAN PATENT SPECIFICATION

(11) **EP 1 583 940 B1**
(45) Date of publication and mention of the grant of the patent: **01.05.2013**
(21) Application number: 03786438.6
(22) Date of filing: 24.12.2003
(51) Int. Cl.: G01F 25/00, G01F 1/00

(54) **CALIBRATION JUG FOR CALIBRATING FUEL PUMPS**
KALIBRIERUNGSKANNE ZUR KALIBRIERUNG VON KRAFTSTOFFPUMPEN
JAUGE D'ETALONNAGE POUR ETALONNER DES POMPES A CARBURANT

(30) Priority: 16.01.2003 NL 1022405
(43) Date of publication of application: 12.10.2005
(73) Proprietor: Mokobouw Service B.V., 8447 GM Heerenveen (NL)
(72) Inventor: SCHEPERS, Halbe, Wietse, NL-8447 GM Heerenveen (NL); NOBACK, Herman, Roelof, NL-9746 PX Groningen (NL)
(74) Representative: Mink-Lindenburg, Charlotte Hildegard
(86) International application number: PCT/NL2003/000944
(87) International publication number: WO 2004/070327

(56) References cited:
- DE-C- 19 627 269
- US-A- 4 928 514
- US-A- 5 284 046
- US-A- 5 606 109

## Description

The invention relates to a calibration jug for calibrating fuel pumps, comprising a jug provided with at least one grade mark, to be filled during the calibration process.

Jugs of this type are routinely used for calibrating petrol pumps of commercially operating filling stations. During calibration, the calibration jug is filled a number of times with a nozzle, with different filling speeds, up to the grade mark and the amount displayed by the petrol pump is compared with the known volume of the calibration jug.

*A calibration jug according to the preamble of claim 1 is described in* DE19627269*.*

While filling the calibration jug, a problem is that a substantial amount of foam is formed which hampers the reading of the grade mark. For that reason, the last part of the calibration jug must be filled slowly, which is time consuming and which may influence the results, especially when the filling is supposed to take place at a high speed.

The calibration jug according to the invention substantially obviates this disadvantage and is according to an aspect of the invention characterised in that the jug is at least substantially spherical and *that the supply pipe (2) ends on or in the jug (1) out of the centre of the jug (1), such that the jug (1) can be filled with fuel in one large whirl.* As a result of the spherical, shape and the low position of the supply pipe, the calibration jug will be filled in one big, swirling movement, with little turbulence on a smaller scale, so that the formation of foam is reduced to a minimum.

A favourable embodiment which will further stimulate the formation of one big swirling movement and which even further reduces the formation of foam is characterised in that a first end of the supply pipe which is connected to the jug is operationally placed such that a prolongation of this first end will not intersect an operationally at least substantially vertically positioned main axis of the jug and will meet a plane perpendicular to the main axis at an angle of thirty to fifty degrees.

A further favourable embodiment is characterised in that on a top side, the jug is provided with a raiser onto which a scale is affixed and on a bottom side with an outlet pipe in which a valve is placed. The raiser in fact renders the very accurate filling of the calibration jug superfluous, at least as long as it is filled to a level which falls within the scale, which will make the calibration procedure less time consuming. The outlet pipe simplifies the draining of the jug, once a calibration has taken place.

A favourable embodiment according to another aspect of the invention is characterised in that the supply pipe has an at least substantially semicircular shape and intersects the raiser above the scale. The result is that foam, which rises inside the raiser will also end up at the nozzle via which the fuel is supplied, which automatically switches off the fuel pump and simplifies in this way the calibration process even further. In order to obtain reproducible results, with the fuel level situated preferably somewhere in the middle of the scale, a second end of the supply pipe is provided with an adapter into which a nozzle of a fuel pump may be placed. In order to make the calibration jug fit for use with different types of fuel, which generally behave differently with.respect to the formation of foam, a further favourable embodiment is characterised in that the adapter is slidable mounted onto or in the supply pipe, so that the moment on which the produced foam will reach the nozzle can be adjusted.

A nozzle, connected to a petrol pump, is provided with an outlet pipe via which the fuel is supplied, but also with an inlet pipe via which air, mixed with vapour originating from the fuel is drained away to a tank from which the petrol pump obtains its fuel. Preferably, as much air and vapour must be drained away as fuel is supplied, because otherwise inevitably vapour, originating from the fuel, will land in the atmosphere. A favourable embodiment according to a further aspect of the invention, which makes it possible to check this aspect, is characterised in that the adapter is provided with sealing means which operationally enclose an outlet pipe and an inlet pipe of the nozzle at least substantially leakproof. If, with a top side of the raiser closed, the pressure in the calibration jug rises during filling, then one may conclude that too small an amount of air and vapour is removed and conversely. A further favourable embodiment with which one may precisely measure the amount of air and vapour that is removed too much, or conversely too little, is characterised in that a top side of the raiser is provided with at least one flow meter.

Design criterium for the calibration jug is that a reading error on the scale must be less than the reading error on the petrol pump, which generally amounts to 0,01 litre. A favourable embodiment which can meet this target and which is nevertheless not larger than strictly necessary is characterised in that the capacity of the calibration jug is 6-9 litres. During fabrication, one aims at a capacity of for example 7,5 litre, but this value should be realised only approximately. After fabrication, the capacity of the jug is measured precisely and a scale, corresponding with the capacity, is attached to the raiser.

A further favourable embodiment is characterised in that the calibration jug is manufactured of a transparent material, like glass or polycarbonate, which offers the opportunity to observe the behaviour of the fuel during calibration, so that exceptional circumstances like air bubbles or water or an exceptionally strong formation of foam can be detected immediately.

The invention will now be further explained with a reference to the following figures, in which:
- Fig. 1: shows a possible embodiment of a calibration jug according to the invention in front view;
- Fig. 2: shows this embodiment in top view;
- Fig. 3: schematically shows a possible embodiment of an adapter according to the invention in cross section.

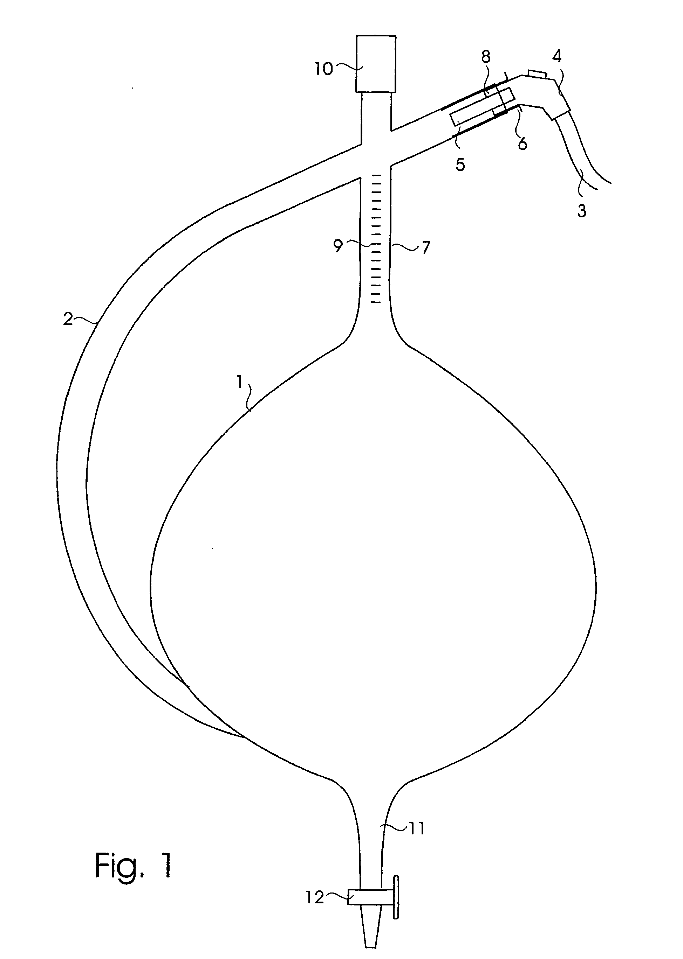

Fig. 1 shows a possible embodiment of a calibration jug according to the invention in front view, consisting of an at least substantially spherical jug 1 to which the fuel is supplied via a supply pipe 2. Supply pipe 2 ends on or in jug 1 on the bottom side and, not visible in this figure, out of the centre, as a result of which jug 1 will be filled with fuel in one large whirl, with little turbulence on a smaller scale, so that the formation of foam is reduced to a minimum. The fuel is supplied via a hose 3 and a nozzle 4 which form part of a fuel pump to be calibrated. An outlet pipe 5 is pushed as far as possible into an adapter 6. Next, a jet of fuel, originating from outlet pipe 5, crosses a raiser 7 which is connected to jug 1 and which crosses supply pipe 2. Apart from an outlet pipe 5, nozzle 4 is provided with an inlet pipe 8, via which air and vapour, originating from the fuel, are transported to a fuel tank, not shown, from which the fuel pump draws the fuel. Nozzle 4 is finally provided with an automatic switch, not shown and well known in the art, which switches off the fuel pump as soon as foam or fuel reaches the nozzle. The calibration functions as follows: Outlet pipe 5 and inlet pipe 8 are pushed as far as possible into adapter 6 and jug 1 is filled with fuel in a usual manner until automatic switch switches off the fuel pump. Next, a scale 9 on riser 7 is read and the amount of fuel, contained in jug 1 is known. This value is compared with the value displayed on the fuel pump, after which the measuring error, made by the fuel pump is known.

On a top side, raiser 7 is provided with a flow meter 10, which measures the amount of air and'vapour passing through. Assuming that adapter 6 forms a good seal and that as much air and vapour is removed via inlet pipe 8 as fuel is supplied via outlet pipe 5, no flow will be measured at all. Obviously, flow meter 10 measures the error made by a vapour return system, known as such. If this error is too big, then measures should be taken because the escaping vapour is harmful to man and to the environment in general. Flow meter 10 may be a bidirectional flow meter, suitable for measuring a gas and well known in the art or may consist of two unidirectional flow meters, for example rotameters, well known in the art, in which case the first rotameter measures air that may flow in and the second rotameter measures air and vapour that may flow out.

On a bottom side, jug 1 is provided with an outlet pipe 11 which is closed by a valve 12, via which the fuel in jug 1 can be drained, once a calibration has taken place.

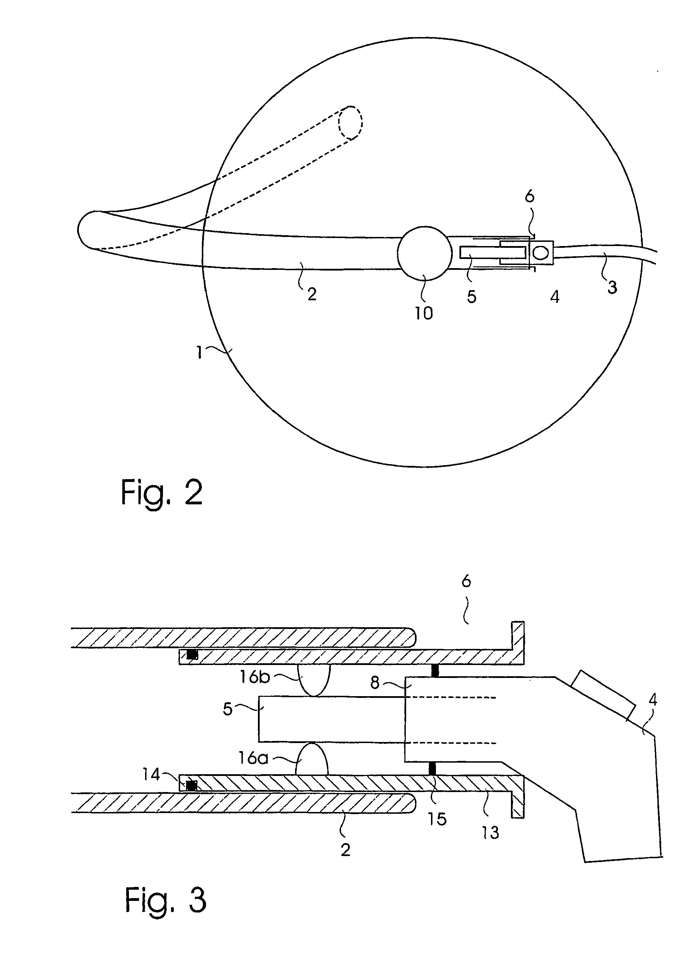

Fig. 2 shows this embodiment in top view, with the at least substantially spherical jug 1 to which the fuel is supplied via a supply pipe 2. Supply pipe 2 ends on or in jug 1 on the bottom side, out of the centre, as a result of which jug 1 will be filled with fuel in one large whirl. The fuel is supplied via a hose 3, a nozzle 4 and an outlet pipe 5 which is pushed into an adapter 6 as far as possible. On top of jug 1 a raiser is placed, not visible in this figure, on a top side provided with a flow meter 10.

Fig. 3 schematically shows a possible embodiment of an adapter 6 according to the invention in cross section, consisting of a tube 13, made for example of a synthetic material, inside of which an 0-ring 14 is placed on a first side, which provides a gas-tight seal between adapter 6 and supply pipe 2. On a second side, a membrane 15 made of rubber is placed in tub 13. Membrane 15 is provided with an opening into which combined outlet pipe 5 and inlet pipe 8 may be pushed while exerting some force, in such a way that also a gas tight seal is obtained. In tube 13, some protrusions 16a, 16b, .. made of a synthetic material are placed, for centring outlet pipe 5. Adapter 6 may be slided inside supply pipe while exerting some force, slidable mounted onto or in the supply pipe, so that the moment on which the produced foam will reach nozzle 4 and accordingly the fuel pump will be switched off can be adjusted.

Jug 1 may be made together with supply pipe 2, outlet pipe 11 and raiser 7 in one piece from an industrial type of glass, making it possible to precisely observe the behaviour of the fuel during the calibration process. Another advantage of glass is that the calibration jug may be produced economically and that it is dimensionally stable, making a recalibration of the calibration jug superfluous. Moreover, the capacity of the jug will hardly change with temperature, because of the low coefficient of expansion. Instead of glass, a transparent synthetic material like polycarbonate may be used for making the calibration jug. It is also possible to make the calibration jug of a non-transparent material, as long as raiser 7 is locally transparent near scale 9 in order to enable its reading.

## Claims

1. Calibration jug for calibrating fuel pumps, comprising a jug (1) provided with at least one grade mark (9), to be filled during the calibration process, the jug (1) is at least substantially spherical, the supply pipe (2) for the fuel ends at a bottom of the jug (1), and on a top side, the jug (1) is provided with a raiser (7) onto which a scale (9) is affixed, **characterised in that** the supply pipe (2) has an at least substantially semicircular shape, such that formation of foam is reduced to a minimum during the filling of the jug (1), and on a bottom side, the jug (1) is provided with an outlet pipe (11) in which a valve (12) is placed wherein the supply pipe (2) intersects the raiser (7) above the scale (9).

2. Calibration jug according to claim 1, **characterised in that** a first end of the supply pipe (2) which is connected to the jug (1) is operationally placed such that a prolongation of this first end will not intersect an operationally at least substantially vertically positioned main axis of the jug (1) and will meet a plane located near the bottom of the jug and perpendicular to the main axis at an angle of thirty to fifty degrees.

3. Calibration jug according to claim 1 or 2, **characterised in that** a second end of the supply pipe (2) is provided with an adapter (6) into which a nozzle (4) of a fuel pump may be placed

4. Calibration jug according to claim 3, **characterised in that** the adapter (6) is slidably mounted onto or in the supply pipe (2).

5. Calibration jug according to claim 4, **characterised in that** the adapter (6) is provided with sealing means (14,15) which operationally enclose at least substantially leakproof an outlet pipe (11) and an inlet pipe (8) of the nozzle (4).

6. Calibration jug according to claim 5, **characterised in that** a top side of the raiser (7) is provided with at least one flow meter (10).

7. Calibration jug according to one of the claims 1 to 6, **characterised in that** the capacity of the calibration jug (1) is 6-9 litres.

8. Calibration jug according to one of the previous claims, **characterised in that** the calibration jug (1) is manufactured of a transparent material, like glass or polycarbonate.

## Patentansprüche

1. Kalibriergefäß zum Kalibrieren von Kraftstoffpumpen, umfassend ein Gefäß (1), das mit mindestens einer Graduierung (9) versehen ist und das während des Kalibriervorgangs befüllt wird, wobei das Gefäß (1) im Wesentlichen sphärisch ausgebildet ist und das Zuführrohr (2) für den Kraftstoff am Boden des Gefäßes (1) endet und das Gefäß (1) auf einer Oberseite mit einem Steigrohr (7) versehen ist, auf welches eine Skala (9) aufgebracht ist, **dadurch gekennzeichnet, dass** das Zuführrohr (2) eine wenigstens im Wesentlichen halbkreisförmige Form aufweist, so dass die Schaumbildung während des Befüllens des Gefäßes (1) auf ein Minimum reduziert ist und das Gefäß (1) an einer Unterseite mit einem Ablaufrohr (11) versehen ist, in dem ein Ventil (12) angeordnet ist, wobei das Zuführrohr (2) das Steigrohr (7) oberhalb der Skala (9) kreuzt.

2. Kalibriergefäß gemäß Anspruch 1, **dadurch gekennzeichnet, dass** ein erstes Ende des Zuführrohres (2), das mit dem Gefäß (1) verbunden ist so angeordnet ist, daß eine Verlängerung dieses ersten Endes nicht eine im Wesentlichen senkrecht ausgerichtete Hauptachse des Gefäßes (1) kreuzt und auf eine Ebene trifft, die nahe der Unterseite des Gefäßes angeordnet ist und in einem Winkel von dreißig bis fünfzig Grad zu der Hauptachse angeordnet ist.

3. Kalibriergefäß gemäß Anspruch 1 oder Anspruch 2, **dadurch gekennzeichnet, dass** ein erstes Ende des Zuführrohres (2) mit einem Adapter (6) versehen ist, in dem ein Ausgießer (4) der Kraftstoffpumpe angeordnet werden kann.

4. Kalibriergefäß gemäß Anspruch 3, **dadurch gekennzeichnet, dass** der Adapter (6) gleitbar auf oder in dem Zuführrohr (2) angeordnet ist.

5. Kalibriergefäß gemäß Anspruch 4, **dadurch gekennzeichnet, dass** der Adapter (6) mit Dichtmitteln (14, 15) versehen ist, die ein im Wesentlichen leckagefreies Ablaufrohr (11) und ein Zuführrohr (8) des Ausgießers (4) umfassen.

6. Kalibriergefäß gemäß Anspruch 5, **dadurch gekennzeichnet, daß** an der Oberseite des Steigrohres (7) mindestens eine Flüssigkeitsmessvorrichtung (10) angeordnet ist.

7. Kalibriergefäß gemäß einem der Ansprüche 1 bis 6, **dadurch gekennzeichnet, dass** die Kapazität des Kalibriergefäßes (1) 6 bis 9 Liter beträgt.

8. Kalibriergefäß gemäß einem der vorhergehenden Ansprüche, **dadurch gekennzeichnet, dass** das Kalibriergefäß (1) aus transparentem Material wie Glas oder Polycarbonat hergestellt ist.

## Revendications

1. Jarre de calibration pour calibrer les pompes à essence, comprenant une jarre (1) pourvue d'au moins une graduation (9) qui est remplie lors du processus de calibrage, la jarre (1) étant au moins essentiellement de forme sphérique, le tube d'alimentation (2) pour l'essence se terminant dans le bas de la jarre (1) et la jarre (1) étant pourvue sur la partie supérieure d'un tube montant (7) sur lequel est appliqué une graduation (9), **caractérisée en ce que** le tube d'alimentation (2) a une forme au moins essentiellement de demi-cercle, de manière que la formation de mousse lors du remplissage de la jarre (1) soit réduit à un minimum et que la jarre (1) est pourvue à sa partie inférieure d'un tube de sortie (11) dans lequel est placé une soupape (12), le tube d'alimentation (2) croisant le tube montant (7) au-dessus de la graduation (9).

2. Jarre de calibration selon la revendication 1, **caractérisée en ce qu'** une première extrémité du tube d'alimentation (2), qui est reliée à la jarre (1) est positionnée de telle manière qu'un prolongement de cette première extrémité ne croise pas un axe principal au moins essentiellement vertical de la jarre (1) et va rencontrer un plan situé près du fond de la jarre et qui est placé dans un angle de trente à cinquante degrés par rapport à l'axe principal.

3. Jarre de calibration selon la revendication 1 ou la revendication 2, **caractérisé en ce qu**'une première extrémité du tube d'alimentation (2) est pourvue d'un adaptateur (6) dans lequel un verseur (4) de la pompe à essence peut être placé.

4. Jarre de calibration selon la revendication 3, **caractérisé en ce que** l'adaptateur (6) est monté de manière à pouvoir glisser sur ou dans le tube d'alimentation (2).

5. Jarre de calibration selon la revendication 4, **caractérisé en ce que** l'adaptateur (6) est pourvu de moyens d'étanchéité (14, 15), qui comprennent un tube de sortie (11) et un tube d'alimentation (8) du verseur (4).

6. Jarre de calibration selon la revendication 5, **caractérisé en ce qu**'au moins un dispositif volumétrique (10) est prévu sur la partie supérieure du tube montant (7).

7. Jarre de calibration selon l'une des revendications 1 à 6, **caractérisé en ce que** la capacité de la jarre de calibration (1) est de 6 à 9 litres.

8. Jarre de calibration selon l'une des revendications précédentes, **caractérisé en ce que** la jarre (1) est fabriquée d'un matériau transparent comme le verre ou le polycarbonate.
